# FASCICULE DE BREVET EUROPEEN

(11) **EP 2 069 201 B1**
(45) Date de publication et mention de la délivrance du brevet: **18.05.2011**
(21) Numéro de dépôt: 07823806.0
(22) Date de dépôt: 11.09.2007
(51) Int. Cl.: B64G 1/50

(54) **DISPOSITIF DE GESTION DES FLUX THERMIQUES DANS UN ENGIN SPATIAL ET ENGIN SPATIAL EQUIPE D'UN TEL DISPOSITIF**
VORRICHTUNG ZUR STEUERUNG DES WÄRMEFLUSSES IN EINEM RAUMFAHRZEUG UND MIT DERARTIGER VORRICHTUNG AUSGESTATTETES RAUMFAHRZEUG
DEVICE FOR CONTROLLING THERMAL FLUX IN A SPACECRAFT AND SPACECRAFT EQUIPPED WITH SUCH A DEVICE

(30) Priorité: 15.09.2006 FR 0608119
(43) Date de publication de la demande: 17.06.2009
(73) Titulaire: Astrium SAS, 75016 Paris (FR)
(72) Inventeur: JONDEAU, Laurence, F-31500 Toulouse (FR); FLEMIN, Christian, F-31280 Dremil Lafage (FR); MENA, Fabrice, F-81500 Teulat (FR)
(74) Mandataire: Cabinet Plasseraud
(86) Numéro de dépôt international: PCT/FR2007/051910
(87) Numéro de publication internationale: WO 2008/031985

(56) Documents cités:
- EP-A1- 1 468 911
- GB-A- 2 270 666
- US-A- 5 806 803
- US-A- 6 073 887
- US-A- 6 073 888
- US-A1- 2002 139 512

## Description

La présente invention porte sur un dispositif de gestion des flux thermiques dans un engin spatial en orbite.

Du fait de son déplacement sur l'orbite, les faces d'un engin spatial ou satellite sont soumises à des variations du flux des rayons solaires en fonction de leur orientation et de leur éloignement par rapport au soleil. Ainsi, certaines faces de l'engin ne reçoivent pas la même quantité d'énergie thermique au cours d'une période de vingt-quatre heures et au cours des saisons.

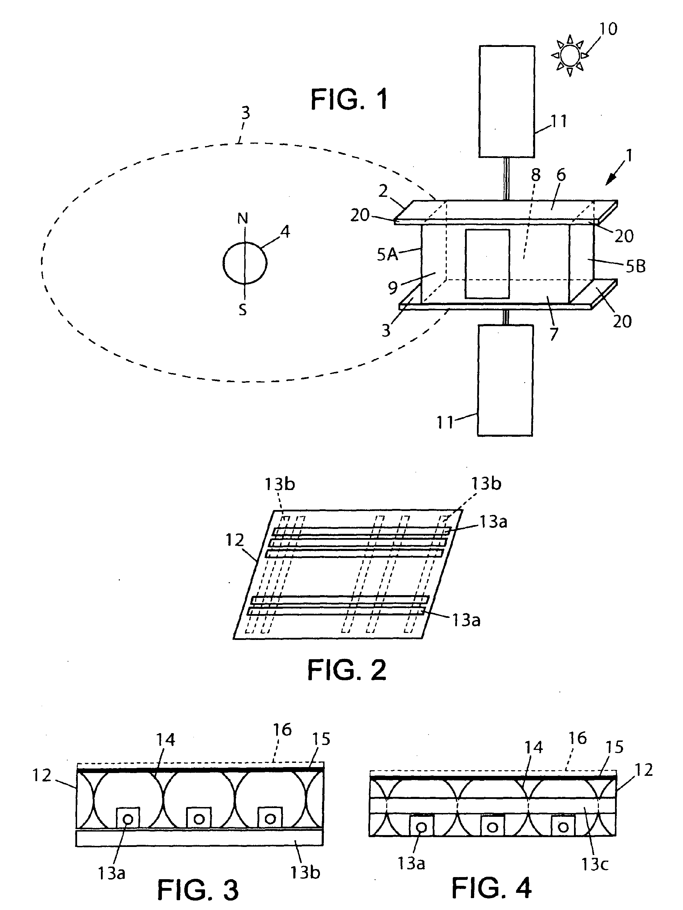

Par exemple, de manière courante et comme cela est représenté de manière plus précise sur la figure 1, un engin spatial du type satellite géostationnaire 1 se présente sous la forme d'un boîtier 2 parallélépipédique tournant sur une orbite 3 autour de la Terre 4 et présentant toujours la même face dirigée vers la Terre, cette face étant appelée la face Terre 5A, la face opposée et parallèle à la face Terre 5A est quant à elle appelée la face anti-Terre 5B. La face Nord 6 et la face Sud 7 du boîtier sont toutes deux opposées l'une de l'autre, parallèles entre elles et perpendiculaires à l'axe Nord-Sud de la Terre 4 tandis que les faces Est 8 et Ouest 9 sont deux autres faces opposées, parallèles entre elles et perpendiculaires à la direction de déplacement de l'engin spatial 1. Du fait de la nature de l'orbite géostationnaire, les faces Nord 6 et Sud 7 sont relativement peu exposées aux rayons émis par le soleil 10 par rapport aux faces Est 8 et Ouest 9, qui sont alternativement exposées à ces rayons au cours d'une révolution orbitale. Usuellement, les faces Nord 6 et Sud 7 sont les faces sur lesquelles sont fixés des panneaux solaires 11 et les faces Est 8 et Ouest 9 sont les faces sur lesquelles sont fixées des antennes de communication.

Les variations de températures d'une face à l'autre et d'une même face au cours du temps limitent les capacités de dissipation de la chaleur de ces surfaces. Ainsi, une surface exposée au soleil ne rejettera pas ou moins de chaleur par rapport à une surface située à l'ombre ou recevant peu de rayons lumineux.

De ce fait, afin de permettre la régulation des flux thermiques dans un satellite, il est nécessaire de prévoir des moyens permettant de dissiper l'énergie thermique reçue par l'une des faces chaudes du satellite.

Pour permettre cette régulation et dissipation de l'énergie thermique, des panneaux radiatifs, ayant l'aptitude d'irradier la puissance dissipée vers l'espace tout en minimisant les flux solaires absorbés quand ces panneaux sont exposés au soleil, sont prévus sur des faces du satellite.

De manière courante, les faces Nord et Sud sont utilisées pour la dissipation de chaleur du fait qu'elles reçoivent une faible quantité de flux solaire qui est relativement constante au cours du temps.

De ce fait, il est courant de placer sur ces faces Nord et Sud du satellite des unités dissipatrices de chaleur dites « sources chaudes », telles qu'un Tube à Ondes Progressives (TOP) ou OMUX (output multiplexer), qu'il convient également de réguler thermiquement par dissipation de leur énergie thermique à l'aide de ces radiateurs ou panneaux radiatifs, lorsqu'elles sont en service.

Afin de permettre une dissipation plus importante de chaleur, la surface radiative devrait être augmentée. Cependant, les surfaces utilisables pour la radiation thermique sont limitées par le volume disponible dans le lanceur spatial et les éléments déjà prévus en surface du satellite, tel que les antennes.

Ainsi, du fait que la puissance thermique disponible est limitée, l'un des principaux challenges pour les constructeurs de satellites de télécommunication est d'arriver à obtenir le meilleur compromis entre les la puissance dissipée, les surfaces radiatives et la masse du satellite.

Afin d'augmenter la quantité de chaleur apte à être dissipée, il est courant de prévoir au sein du satellite des moyens de transfert de la chaleur d'une face chaude vers une face plus froide pouvant dissiper plus de chaleur.

Ainsi, afin de permettre la dissipation de chaleur d'une face du satellite vers une autre, selon le document US 5 806 803, il est présenté un réseau de caloducs (« heat pipe ») reliant une face d'un satellite à une autre face parallèle opposée du satellite en passant par un panneau transversal interne. Toutefois, ce réseau est relativement complexe à mettre en oeuvre et présente des contraintes d'encombrement interne.

Selon le même principe, à savoir la liaison directe de deux faces opposées parallèles entre elles d'un satellite par un réseau de caloducs, il est présenté dans un document US 2002/0139512, un système de caloducs reliant transversalement la face Est à la face Ouest du satellite de manière à partager la charge thermique entre ces deux faces.

Selon le document US 6 073 888, il est intégré un système de gestion des flux thermiques en plaçant des radiateurs sur les faces Nord, Sud, Est et Ouest et en les connectant à une charge thermique ou des unités dissipatrices à l'aide de caloducs à conductance variable (Variable Conductance Heat Pipes (VCHP)) ou des caloducs à diode (Diode Heat Pipe (DHP)). Toutefois, ce système est également complexe à mettre en oeuvre et présente des contraintes d'intégration en terme de masse et de volume représentant un frein majeur à son utilisation

Dans le document US 6 073 887, il est divulgué un système de gestion des flux thermiques à partir de caloducs dans lesquels circulent un fluide caloporteur et reliant certaines faces du satellite entre elles et permettant d'utiliser les faces Est et Ouest comme des faces radiatives sur lesquelles des équipements électroniques chauffants puissent être placés, en plus des faces Nord et Sud sur lesquelles de tels équipements sont déjà installés. Il est ainsi prévu de réaliser une boucle de caloducs reliant les faces Est, Ouest. Terre et anti-Terre de manière à réguler la puissance thermique sur l'ensemble de ces faces.

Il n'est toutefois pas prévu dans ce document de permettre une plus grande dissipation thermique des faces Nord et Sud, mais au contraire d'augmenter la dissipation thermique des faces Est et Ouest en formant une boucle de caloducs passant par les faces Est, Ouest, Terre et anti-Terre.

Il est présenté dans le document EP 1 468 911 un système de gestion des flux thermiques permettant de dissiper ces flux par l'intermédiaire des faces Nord, Sud, Est et Ouest à partir d'une étagère supportant les équipements et les moyens de transfert thermique pour transférer la chaleur dégagée par les équipements électroniques dégageant de la chaleur vers les panneaux radiateurs Nord, Sud, Est et Ouest, les moyens de transfert thermique étant constitués par au moins une boucle fluide diphasique à pompage capillaire.

Toutefois, il est nécessaire selon cet art antérieur de rajouter une structure, à savoir une étagère, pour supporter le système de gestion de flux thermiques, d'où des contraintes d'encombrement.

Il est connu selon le document US 6 073 888, et plus précisément du mode de réalisation illustré à la figure 7 de ce document, de réaliser un dispositif de gestion des flux thermiques dans un engin spatial présentant toujours une même face tournée vers la Terre à l'aide d'un ensemble de caloducs placé soit sur la face Nord, soit sur la face Sud, sur lequel est fixé une charge thermique, et qui est courbé et se prolonge sur les faces Est et Ouest de l'engin spatial. Toutefois, un tel dispositif de gestion des flux thermiques n'est pas autonome et ne peut fonctionner de manière continue au cours du temps. Il est en effet nécessaire de prévoir des interrupteurs thermiques pour permettre le bon fonctionnement de ce dispositif, ce qui le rend difficile à mettre en oeuvre et onéreux.

Il est également connu du document GB 2 270 666 de réaliser un dispositif de gestion de flux thermiques dans un engin spatial à l'aide de caloducs reliant la face Terre de l'engin aux faces Sud et Nord, ce qui aboutit à la formation d'un ensemble de caloducs reliant trois faces de l'engin.

Toutefois, ce mode de réalisation ne permet également pas de permettre la réalisation d'un dispositif de gestion des flux thermiques qui soit autonome et pouvant fonctionner en toutes saisons.

Il serait donc particulièrement intéressant de réaliser un système de gestion des flux thermiques permettant de dissiper la chaleur émise par des équipements électroniques placés sur les faces Nord et Sud et ne nécessitant pas l'ajout d'un panneau transversal ou d'un élément prévu transversalement entre deux faces opposées du satellite.

Il serait donc particulièrement intéressant de réaliser un dispositif de régulation thermique de la puissance dissipée par les faces Nord et Sud d'un satellite géostationnaire permettant d'augmenter le nombre d'équipements électroniques chauffants sur ces faces tout en n'entraînant pas des contraintes de poids et d'encombrement.

Il serait également intéressant de réaliser un dispositif de régulation des flux thermiques qui soit autonome, pouvant fonctionner en toutes saisons et de manière totalement passive, c'est-à-dire sans nécessiter une intervention ou une modification de son mode de fonctionnement au cours du temps en fonction de sa position sur son orbite.

Ainsi, c'est un des objets de la présente invention de fournir un engin spatial comportant un dispositif de gestion des flux thermiques permettant d'améliorer la capacité de dissipation des flux thermique émis par les faces Nord et Sud tout en fonctionnant de manière autonome, continue et passive.

C'est un autre objet de la présente invention de réaliser un engin spatial comportant un dispositif de gestion des flux thermiques peu encombrant et d'une masse satisfaisant aux critères des lanceurs.

Pour ce faire, la présente invention porte sur un engin spatial comportant un dispositif de gestion des flux thermiques, l'engin spatial présentant toujours une même face tournée vers la Terre, une paire de faces opposées Nord et Sud parallèles entre elles et perpendiculaires à l'axe Nord-Sud de la Terre et deux paires de faces opposées parallèles entre elles : Est / Ouest et Terre / anti-Terre, des équipements dissipateurs ou transmetteurs de chaleur étant prévus sur les parois internes des faces Nord et Sud, caractérisé en ce que ledit dispositif comprend une pluralité de caloducs reliant les faces Nord et Sud dudit engin à une autre paire de faces opposées dudit engin et formant une boucle de caloducs en contact de conduction thermique les uns avec les autres. De cette manière, il est possible de permettre une plus grande dissipation de la chaleur émise par les faces Nord et Sud, puisque la chaleur émise est transférée vers deux autres faces de l'engin spatial, ces faces étant alternativement illuminées par les flux solaires et donc il existe toujours une face sensiblement à l'ombre pouvant dissiper plus facilement les flux thermiques.

Afin de permettre la formation d'une boucle de caloducs en contact les uns avec les autres sur quatre faces distinctes de l'engin spatial, le dispositif comprend au moins une paire de caloducs de connexion avec une première et une seconde branches, la première branche de l'un des caloducs de connexion de ladite paire de caloducs de connexion étant fixée, en contact de conduction thermique, sur un panneau radiatif de la face Nord, et la première branche de l'autre des caloducs de connexion de ladite paire de caloducs de connexion étant fixée, en contact de conduction thermique, sur un panneau radiatif de la face Sud.

Selon une première forme de réalisation de la boucle de caloducs, ladite première branche dudit caloduc de connexion est fixée sur au moins une partie d'une extension du panneau radiatif soit de la face Nord, soit de la face Sud en saillie de ladite autre paire de faces opposées.

Selon une seconde forme de réalisation de la boucle de caloducs, ladite première branche dudit caloduc de connexion est fixée sur la paroi interne dudit panneau radiatif soit de la face Nord, soit de la face Sud, dans le volume intérieur délimité par les faces dudit engin spatial.

De manière à permettre la dissipation de chaleur à partir des faces de ladite paire de faces opposées, ladite seconde branche dudit caloduc de connexion est fixée sur la paroi externe de l'une des faces appartenant à ladite autre paire de faces opposées.

Afin d'augmenter la surface dissipative des faces de ladite paire de faces opposées, un panneau radiatif est fixé sur lesdites secondes branches de ladite paire de caloducs de connexion.

Avantageusement, lesdites première et seconde branches dudit caloduc de connexion sont de même longueur.

De manière alternative, afin de permettre la formation d'une boucle de caloducs en contact de conduction thermique les uns avec les autres, ladite seconde branche dudit caloduc de connexion de ladite paire de caloducs de connexion est fixée en contact de conduction thermique sur une autre seconde branche d'un autre caloduc de connexion de ladite paire de caloducs de connexion qui est elle-même fixée sur la paroi externe de l'une des faces appartenant à ladite autre paire de faces opposées.

Avantageusement, ladite seconde branche dudit caloduc de connexion est de longueur plus grande que ladite première branche dudit caloduc de connexion.

Selon un mode de réalisation particulier, et afin d'augmenter la surface radiative des faces de la paire de faces opposées, une plaque, préférentiellement en aluminium, est fixée sur les secondes branches desdits caloducs de connexion d'une même face appartenant à ladite autre paire de faces opposées et qui sont en contact de conduction thermique avec une seconde branche d'un autre caloduc de connexion.

Selon un mode de réalisation particulier alternatif, et afin d'augmenter la surface radiative des faces de la paire de faces opposées, ladite seconde branche dudit caloduc de connexion qui est fixée sur la seconde branche d'un autre caloduc de connexion comprend une paire d'ailettes tangentielles à un élément tubulaire dans lequel circule un fluide caloporteur, une des ailettes étant de dimension transversale plus grande que l'autre ailette.

De manière avantageuse, il est prévu sur les faces Nord et Sud au moins un panneau radiatif avec une structure en nid d'abeille sur, ou dans, lesquels sont associés des réseaux de caloducs.

Selon un mode de réalisation particulier d'un panneau radiatif, la structure en nid d'abeille comporte un premier réseau de caloducs logés dans des alvéoles dudit nid d'abeille et un second réseau de caloducs placés extérieurement sur une surface dudit nid d'abeille et perpendiculairement aux caloducs du premier réseau.

Selon un mode de réalisation particulier alternatif d'un panneau radiatif, la structure en nid d'abeille comporte un premier réseau de caloducs logés dans des alvéoles dudit nid d'abeille et un second réseau de caloducs traversants lesdites alvéoles perpendiculairement aux caloducs dudit premier réseau.

La présente invention est maintenant décrite à l'aide d'exemples uniquement illustratifs et nullement limitatifs de la portée de la présente invention et à partir des illustrations ci-jointes dans lesquelles :
- la figure 1 est une représentation schématique d'un engin spatial ou satellite géostationnaire sur son orbite ;
- la figure 2 est une vue schématique supérieure des réseaux de caloducs présents dans un panneau radiatif de structure en nid d'abeille ;
- la figure 3 est une vue en coupe schématique d'une première forme de réalisation d'un panneau radiatif en nid d'abeille ;
- la figure 4 est une vue en coupe schématique d'une seconde forme de réalisation d'un panneau radiatif en nid d'abeille;
- la figure 5A est une vue en coupe schématique d'une première forme de réalisation d'un caloduc ;
- la figure 5B est une vue en coupe schématique d'une seconde forme de réalisation d'un caloduc ;
- la figure 6 est une vue en coupe schématique d'une première forme de réalisation selon l'invention du dispositif de gestion des flux thermiques entre les faces Nord et Sud d'un satellite géostationnaire ;
- la figure 7 est une vue en coupe schématique détaillée du dispositif de la figure 6 dans lequel les réseaux de caloducs sont liés au panneau radiatif en nid d'abeille illustré à la figure 3 ;
- la figure 8 est une vue en coupe schématique du dispositif de la figure 6 dans lequel les réseaux de caloducs sont liés au panneau radiatif en nid d'abeille illustré à la figure 4 ;
- La figure 9 est une vue frontale d'une face verticale du satellite comprenant la première forme de réalisation du dispositif selon l'invention illustré à la figure 6 ;
- La figure 10 est une vue en coupe schématique d'une seconde forme de réalisation d'un dispositif de gestion des flux thermiques selon l'invention ;
- la figure 11 est une vue en coupe schématique détaillée d'une forme de réalisation de la seconde forme de réalisation du dispositif de la figure 10 dans lequel les réseaux de caloducs sont liés au panneau radiatif en nid d'abeille illustré à la figure 3 ;
- la figure 12 est une vue frontale d'une face verticale du satellite selon la seconde forme de réalisation du dispositif selon l'invention illustré à la figure 11 ;
- la figure 13 est une vue en coupe schématique d'une paire de caloducs placés sur une face verticale du satellite selon la forme de réalisation de l'invention illustrée à la figure 11 ;
- la figure 14 est une vue frontale d'une forme de réalisation alternative de la seconde forme de réalisation du dispositif selon l'invention illustré à la figure 10 ;
- la figure 15 est une vue en coupe schématique d'une paire de caloducs placés sur une face verticale du satellite selon la forme de réalisation alternative de la seconde forme de réalisation illustrée à la figure 14 ;
- la figure 16 est une vue en coupe schématique d'un satellite comprenant le dispositif selon la première forme de réalisation de l'invention ;
- la figure 17 est une vue en coupe schématique d'un autre satellite comprenant le dispositif selon la première forme de réalisation de l'invention ;
- la figure 18 est une vue en perspective d'une troisième forme de réalisation du dispositif selon l'invention, et
- la figure 19 est une vue en coupe schématique de la troisième forme de réalisation du dispositif selon l'invention:

Dans la suite de la description, le terme « unité dissipatrice de chaleur » ou « unité transmetteur de chaleur » doit être respectivement compris comme étant tout élément de l'engin spatial 1 apte à dissiper de la chaleur ou apte à transmettre de la chaleur, étant entendu que le terme « source chaude » est équivalent à ces deux termes. Par ailleurs, les termes « engin spatial » et « satellite » doivent être considérés comme équivalents.

De plus, les notions de « verticalité » et « horizontalité » qui sont utilisées dans la description sont définies uniquement par rapport au mode de représentation du satellite sur les figures et ne doivent être en aucun cas comprises comme étant des notions limitatives. De ce fait, un élément horizontal est un élément sensiblement parallèle ou confondu à l'axe EstOuest tandis qu'un élément vertical est un élément sensiblement parallèle ou confondu à l'axe Nord-Sud.

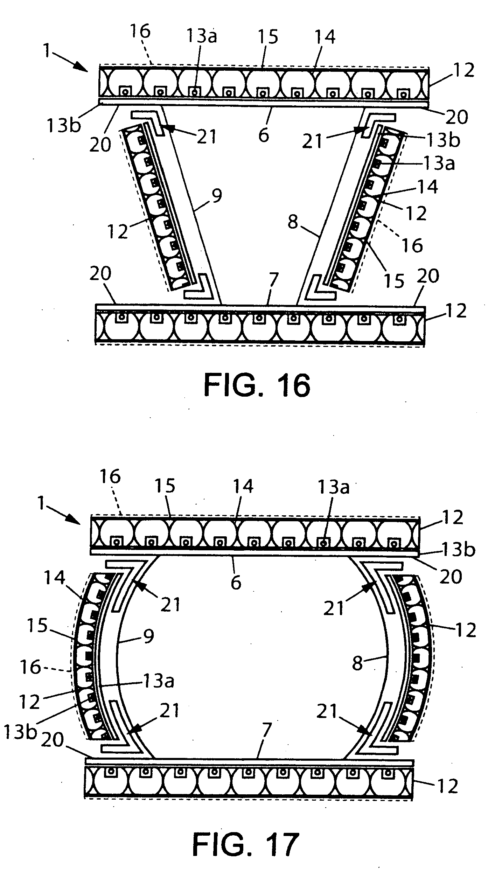

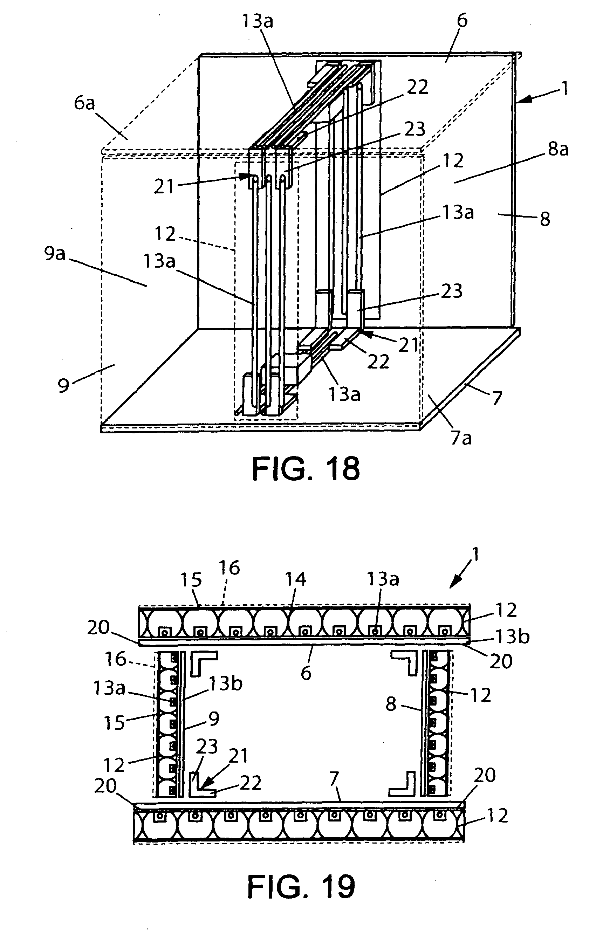

Ainsi, dans le cas de figure où le satellite 1 se présente sous la forme générale d'un parallélépipède, alors la face Nord 6 et la face Sud 7 du satellite sont considérées comme étant des surfaces horizontales et la face Est 8, la face Ouest 9, la face Terre 5A et la face anti-Terre 5B (face opposée et parallèle à la face Terre 5) sont considérées comme étant des surfaces verticales, étant entendu que, selon le mode de réalisation préférentiel d'un satellite, l'ensemble des ces faces forme un ensemble parallélépipédique, mais qu'il est également possible de prévoir, et tel que cela est illustré dans les figures 17 et 18, des satellites présentant certaines faces inclinées par rapport à d'autres.

La figure 2 est une vue schématique supérieure d'un panneau radiatif ayant une structure support en nid d'abeille 12 apte à être intégré au moins partiellement dans une des faces 5-9 du satellite 1.

A ce panneau radiatif en nid d'abeille 12 sont associés deux réseaux de caloducs 13a, 13b (ou « heat pipe ») perpendiculaires entre eux, chaque caloduc 13a, 13b se présentant sous la forme d'un élément tubulaire sensiblement longitudinal dont l'orifice intérieur est rempli avec un fluide caloporteur, préférentiellement de l'ammoniac.

Selon une première forme de réalisation d'un panneau radiatif en nid d'abeille 12, il est prévu un premier réseau 13a de caloducs intégrés dans les alvéoles 14 du nid d'abeille 12 et un second réseau 13b de caloducs prévus en contact perpendiculairement avec les caloducs du premier réseau 13a, les caloducs du second réseau 13b, étant placés extérieurement sur une surface du nid d'abeille 12, avantageusement sur la surface du nid d'abeille 12 destinée à être dirigée vers l'intérieur de l'engin spatial 1.

Afin de permettre la réflexion des flux lumineux reçus par les faces 5-9 du satellite 1 sur lesquelles sont installées les panneaux radiatifs en nid d'abeille 12, il est prévu que la surface extérieure du nid d'abeille 12, c'est-à-dire la surface du nid d'abeille 12 destinée à être dirigée vers l'espace, soit recouverte par une plaque d'aluminium 15 revêtue par un revêtement réfléchissant 16, préférentiellement du type OSR (Optical Solar Reflector) ou, alternativement, une couche de peinture blanche.

Selon une seconde forme de réalisation d'un panneau radiatif en nid d'abeille 12 illustré en coupe schématique dans la figure 4, le second réseau de caloducs 13c est prévu directement intégré dans la structure en nid d'abeille 12 avec les caloducs 13c de ce second réseau en contact perpendiculairement avec les caloducs du premier réseau 13a.

Il peut être ainsi prévu que les caloducs 13c de cette forme de réalisation du second réseau traversent les alvéoles 14 dans lesquelles sont logés les caloducs 13a du premier réseau.

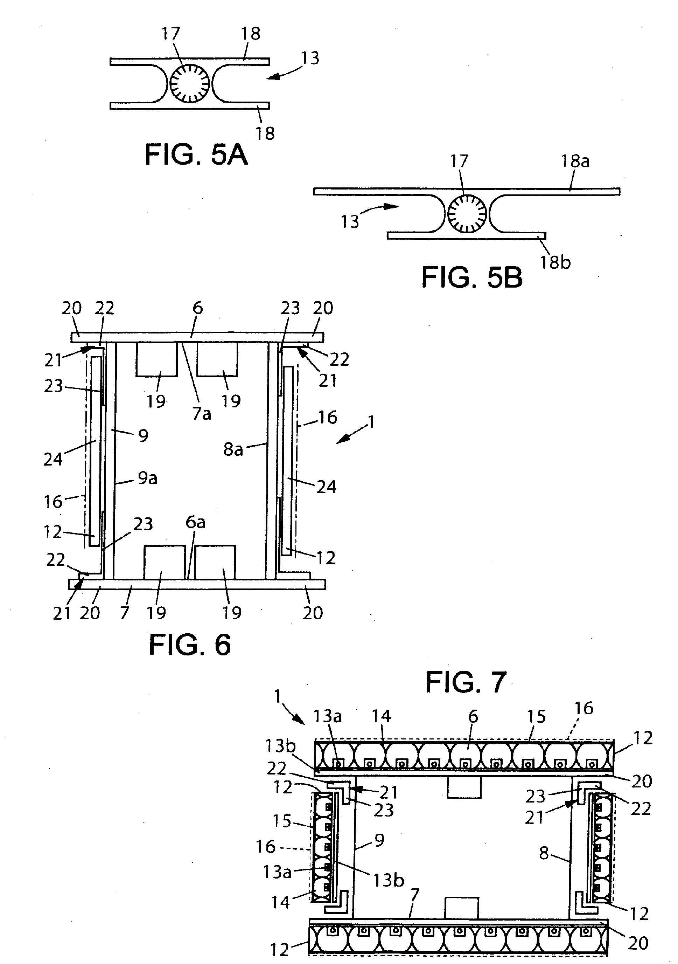

Les figures 5A et 5B représentent respectivement deux vues en coupe schématique d'une forme de réalisation possible d'un caloduc 13.

Selon la première forme de réalisation illustrée à la figure 5A, le caloduc 13, de type connu en soi, est constitué d'un élément tubulaire 17 creux rempli avec un fluide caloporteur, avantageusement de l'ammoniac, et présentant une paire d'ailettes 18 tangentielles, parallèles entre elles et sensiblement de même longueur.

Selon la seconde forme de réalisation illustrée à la figure 5B, il est prévu une ailette 18a de longueur supérieure à la longueur de l'autre ailette 18b.

Les ailettes 18 permettent avantageusement de dissiper de la chaleur emmagasinée par le fluide caloporteur contenu dans le caloduc 13. Ainsi, plus les ailettes 18 sont de longueur importante, plus la quantité de chaleur apte à être dissipée par le caloduc 13 est grande.

La figure 6 est une vue en coupe schématique d'une première forme de réalisation du dispositif selon l'invention de gestion des flux thermiques entre les faces Nord 6 et Sud 7 d'un satellite géostationnaire 1.

Il est prévu sur la paroi interne 6a de la face Nord 6 et sur la paroi interne 7a de la face Sud 7 au moins une source chaude 19, telle qu'un Tube à Ondes Progressives (TOP) ou OMUX (output multiplexer), placée et fixée en contact de conduction thermique sur un panneau radiatif en nid d'abeille 12 et plus précisément sur les caloducs 13a, 13b, 13c liés à ce panneau radiatif.

La source chaude 19 est soit un équipement dissipateur de chaleur, soit un élément transmetteur de chaleur.

Les faces Nord 6 et Sud 7 de l'engin spatial 1 sont prévues avec des extensions ou rebord 20, préférentiellement sous la forme de plaques rectangulaires, en saillie de la paire de faces verticales opposées Est et Ouest 8, 9 ou de la paire de faces verticales opposées Terre 5A et anti-Terre 5B.

Ainsi, quand la face Nord 6 (respectivement Sud 7) est prévue avec deux extensions 20 en saillie par rapport aux faces Est 8 et Ouest 9, alors le satellite 1 présente une première extension 20 de la face Nord 6 (respectivement Sud 7) en saillie de la face Est 8 et une seconde extension 20 de la face Nord 6 (respectivement Sud 7) en saillie de la face Ouest 9, la première et la seconde extensions 20 étant toutes deux de même dimension et de même longueur.

De manière similaire, quand la face Nord 6 (respectivement Sud 7) est prévue avec deux extensions 20 sur les faces Terre 5A et anti-Terre 5B, alors le satellite 1 présente une première extension 20 de la face Nord 6 (respectivement Sud 7) en saillie de la face Terre 5A et une seconde extension 20 de la face Nord 6 (respectivement Sud 7) en saillie de la face anti-Terre 5B, la première et la seconde extensions 20 étant toutes deux de même dimension et de même longueur.

Afin de former une boucle de caloducs reliant la paire de faces Nord 6 et Sud 7 à la paire de faces verticales opposées Est 8 et Ouest 9 (respectivement Terre 5A et anti-Terre 5B) alternativement illuminées par le soleil, il est prévu, sur chacune des faces Est 8 et Ouest 9 (respectivement Terre 5A et anti-Terre 5B), au moins une paire de caloducs de connexion 21, en forme de L, avec une branche horizontale 22 fixée sur la paroi interne de la face Nord 6 ou de la face Sud 7 et une branche verticale 23 fixée sur la paroi externe de la face Est 8 ou de la face Ouest 9 (respectivement de la face Terre 5A ou de la face anti-Terre 5B).

Il est ainsi formé une boucle fermée de caloducs en contact de conduction thermique sur quatre faces du satellite 1, c'est-à-dire reliant soit les faces Nord 6, Sud 7, Est 8 et Ouest 9, soit les faces Nord 6, Sud 7, Terre 5A et anti-Terre 5B. Cette boucle fermée fonctionne de manière continue en toutes saisons, et quelle que soit la position sur l'orbite, la régulation des échanges thermiques se faisant de manière autonome, la face du satellite 1 recevant le plus de flux thermique transmettant l'énergie thermique soit vers la face du satellite 1 la plus froide recevant le moins de flux thermique soit directement vers l'espace via les surfaces Est ou Ouest, en fonction de la position sur l'orbite.

Selon la première forme de réalisation de l'invention, la branche horizontale 22 fixée sur la paroi interne de la face Nord 6 ou Sud 7 est plus précisément fixée sur la paroi interne de l'extension 20 de la face Nord 6 ou Sud 7 en vis-à-vis de la paroi interne de l'autre extension 20 de la face Nord 6 ou Sud 7.

Une plaque 24 en nid d'abeille 12 formant un panneau radiatif est avantageusement fixée sur les branches verticales 23 d'une paire de caloducs de connexion 21 placés sur une même face verticale de l'engin spatial 1.

La figure 7 est une vue en coupe schématique détaillée du dispositif de la figure 6 dans lequel les différents panneaux radiatifs sont tels qu'illustrés à la figure 3.

Afin de permettre la dissipation de la chaleur émise par les sources chaudes 19 placées sur la paroi interne des faces Nord et Sud 6, 7, celles-ci sont fixées sur le second réseau 13b de caloducs placés à l'extérieur de la structure support en nid d'abeille 12.

La plaque 24 en nid d'abeille 12 fixée sur la au moins une paire de caloducs de connexion 21 en L présente la structure telle que décrite dans la figure 3. Dans ce cas de figure, les branches verticales 23 des caloducs de connexion 21 sont en contact direct avec les caloducs 13b du second réseau extérieurs à la structure en nid d'abeille 12.

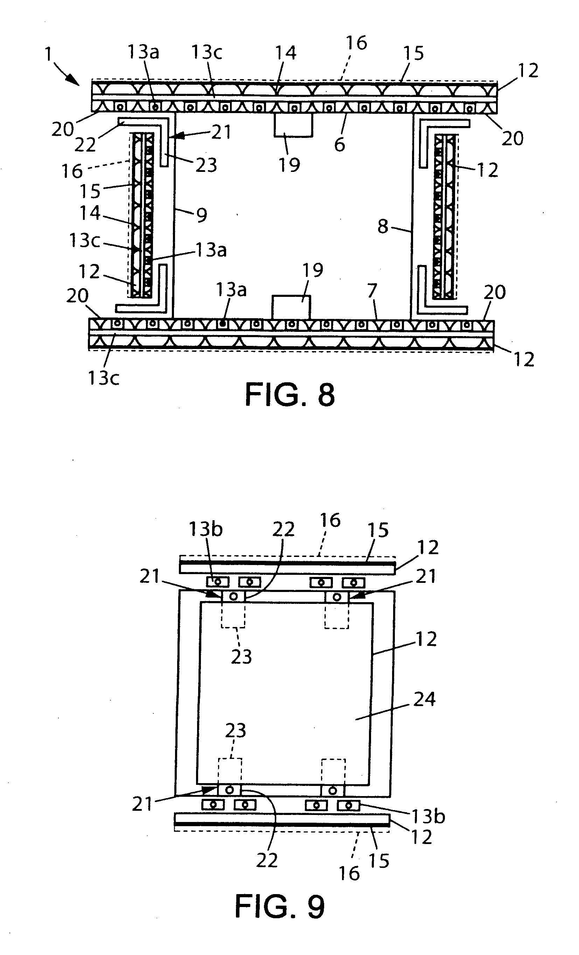

Selon une seconde forme de réalisation et comme cela est représenté à la figure 8, les structures en nid d'abeille 12 installées sur l'engin spatial 1 sont du type tel que décrit dans la figure 4. Ainsi, les plaques 24 en nid d'abeille 12 placées sur la au moins une paire de caloducs de connexion 21, ainsi que les structures radiatives en nid d'abeille 12 prévues au moins en partie dans les faces Nord 6 et Sud 7, sont du type tel que décrit dans la figure 4.

Les sources chaudes 19 sont alors directement placées sur les caloducs du premier réseau 13a de caloducs, réseau dans lequel les caloducs sont intégrés dans les alvéoles 14, et les branches horizontales 23 des caloducs de connexion 21 sont également directement en contact avec les caloducs 13a de ce premier réseau.

De manière alternative, il est également possible de prévoir une combinaison des modes de réalisation décrits dans les figures 7 et 8, c'est-à-dire d'utiliser les panneaux radiatifs en nid d'abeille 12 décrits à la figure 3 pour les faces Nord 6 et Sud 7 et les panneaux radiatifs en nid d'abeille 12 décrits à la figure 4 en tant que plaque 24 de liaison entre une paire de caloducs de connexion 21 prévus sur la face verticale Est 8, Ouest 9, Terre 5A ou anti-Terre 5B.

Il est également possible d'utiliser les panneaux radiatifs en nid d'abeille 12 décrits à la figure 4 pour les faces Nord 6 et Sud 7 et les panneaux radiatifs en nid d'abeille 12 décrits à la figure 3 en tant que plaque 24 de liaison entre une paire de caloducs de connexion 23 prévus sur la face Est 8, Ouest 9, Terre 5A ou anti-Terre 5B.

La figure 9 représente une vue schématique en perspective frontale d'un engin spatial avec, sur une face verticale, une plaque radiative 24 en nid d'abeille placée sur au moins une paire de caloducs de connexion 21 en L.

Le nombre de caloducs de connexion 21 en L présents au niveau de chaque extension 20 des faces Nord 6 et Sud 7 dépend des dimensions de la plaque radiative 24 en nid d'abeille 12 ainsi que du nombre et de la répartition des caloducs 13a, 13b présents dans la structure en nid d'abeille 12 des faces Nord 6 et Sud 7.

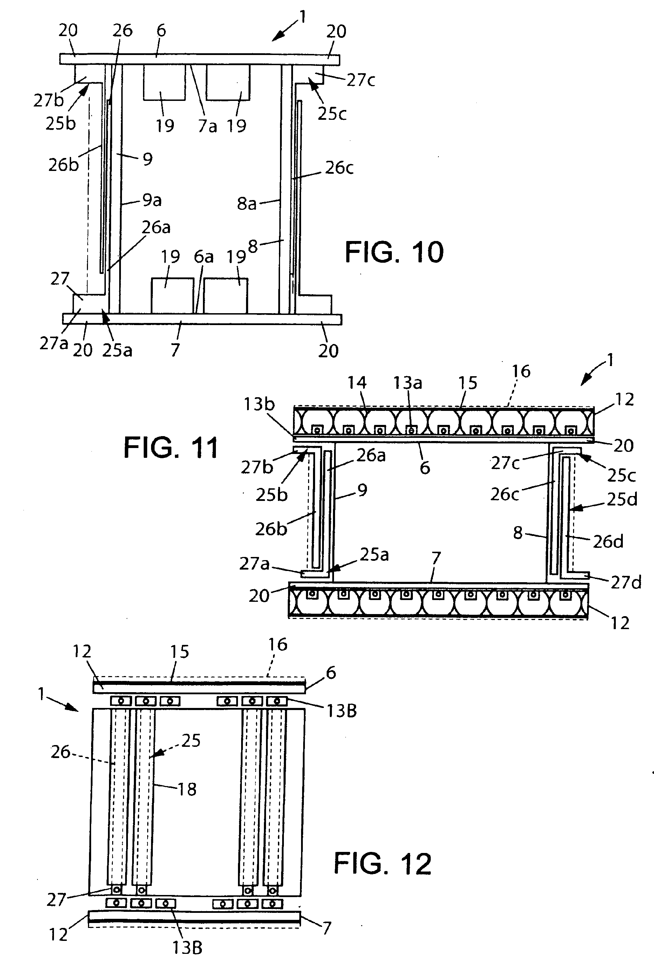

La figure 10 est une vue en coupe schématique d'une seconde forme de réalisation du dispositif selon l'invention de gestion des flux thermiques émis par des sources chaudes 19 placées en contact avec des panneaux radiatifs des faces Nord 6 et Sud 7 d'un satellite géostationnaire 1 avec au moins une paire de caloducs de connexion 25 entre la face Nord 6 et la face Sud 7 du satellite 1, placée sur une même face verticale, se présentant sous la forme de caloducs en forme de L avec une branche principale verticale 26 et une branche secondaire horizontale 27, la branche principale verticale 26 étant de longueur plus grande que la branche secondaire verticale 27.

La branche secondaire horizontale 27 du caloduc de connexion 25 est destinée à être placée en contact contre la surface interne de l'extension 20 des faces Nord 6 et Sud 7 tandis que la branche principale verticale 26 est destinée à être placée soit en contact sur la face verticale Est, Ouest, Terre ou anti-Terre du satellite 1, soit sur une branche principale verticale 26 d'un autre caloduc de connexion 25.

Selon le mode de réalisation particulier illustré à la figure 11, il est prévu sur la face Nord 6 et la face Sud 7 un panneau radiatif sous la forme d'un nid d'abeille 12 du type tel que décrit dans la figure 3. Néanmoins, il est également possible de prévoir un panneau radiatif sous la forme d'un nid d'abeille 12 du type tel que décrit dans la figure 4.

De manière plus précise, il est prévu sur la face Ouest 9 au moins une paire de caloducs de connexion 25a, 25b constituée de:
- un premier caloduc de connexion dit « caloduc inférieur » 25a avec une branche secondaire horizontale 27a placée sur la face interne de l'extension 20 de la face Sud 7 en saillie de la face Ouest 9 et une branche principale verticale 26a placée en contact direct sur la face Ouest 9;
- un second caloduc de connexion dit « caloduc supérieur » 25b avec une branche secondaire horizontale 27b placée sur la face interne de l'extension 20 de la face Nord 6 en saillie de la face Ouest 9 et une branche principale verticale 26b disposée sur la branche principale verticale 26a du caloduc inférieur de connexion 25a.

Par symétrie, il est alors prévu sur la face Est 8 au moins une paire de caloducs de connexion 25c, 25d constituée de :
- un premier caloduc de connexion dit « caloduc inférieur » 25c avec une branche secondaire horizontale 27c placée sur la face interne de l'extension 20 de la face Nord 6 en saillie de la face Est 8 et une branche principale verticale 26c en contact direct avec la face Est 8 ;
- un second caloduc de connexion dit « caloduc supérieur » 25d avec une branche secondaire horizontale 27d en contact sur la face interne de l'extension 20 de la face Sud 7 en saillie de la face Est 8 et une branche principale verticale 26d disposée sur la branche principale verticale 26c du caloduc inférieur de connexion 25c.

De manière alternative, il est également possible de prévoir que les extensions 20 qui sont représentées en saillie des faces Est 8 et Ouest 9 soient en saillie des faces Terre 5A et anti-Terre 5B, et que, par voie de conséquence, les caloducs de connexion 25 soient alors placés en rapport avec ces faces Terre 5A et anti-Terre 5B, la branche principale verticale 26a, 26c du caloduc de connexion inférieur 25a, 25c étant alors fixé soit sur la face Terre 5A, soit sur la face anti-Terre 5B.

En fonction du nombre et de la répartition des caloducs 13a, 13b, 13c associés au panneau radiatif en nid d'abeille 12 prévu dans la face Nord 6 ou Sud 7, alors le nombre et la répartition des caloducs de connexion 25 diffère.

A titre uniquement illustratif, il est représenté sur la figure 12 une forme d'application du positionnement et de la répartition des caloducs de connexion 25 sur une face verticale, c'est-à-dire soit une face Est 8, Ouest 9, Terre 5A ou anti-Terre 5B.

Les faces Nord 6 et Sud 7 présentent chacune selon ce mode de réalisation particulier une structure en nid d'abeille 12 avec un réseau extérieur de caloducs 13b sous la forme de deux groupements de trois caloducs 13b. Il est alors associé à chacun de ces deux groupements deux caloducs de connexion inférieurs 25a, 25c sur lesquels sont placés deux caloducs de connexion supérieurs 25b, 25d formant ainsi deux paires de caloducs de connexion.

Il doit être compris que les caloducs de connexion inférieur et supérieur 25a-25d ont pour but de capter la chaleur emmagasinée par les caloducs horizontaux intégrés dans les panneaux radiatifs en nid d'abeille 12 des faces Nord 6 et Sud 7 et de la transférer vers les autres faces de l'engin spatial 1 sur lesquelles ils sont fixés permettant ainsi d'obtenir une meilleure répartition de la chaleur émise par les faces Nord 6 et Sud 7 sur les autres faces verticales du satellite 1.

Il n'est donc pas forcément nécessaire, pour des contraintes de poids et de volume, de prévoir pour chaque caloduc horizontal extérieur 13b des faces Nord 6 et Sud 7 une paire de caloducs de connexion 25 respective constituée d'un caloduc de connexion vertical inférieur 25a, 25c et d'un caloduc de connexion vertical supérieur 25b, 25d.

Selon le mode de réalisation illustré sur la figure 12, il est ainsi prévu une paire de caloducs de connexion 25 constituée d'un caloduc de connexion vertical inférieur 25a, 25c et d'un caloduc de connexion vertical supérieur 25b, 25d pour deux caloducs horizontaux extérieurs 13b liés au panneau radiatif de la face Nord 6 et deux caloducs horizontaux extérieurs 13b liés au panneau radiatif de la face Sud.

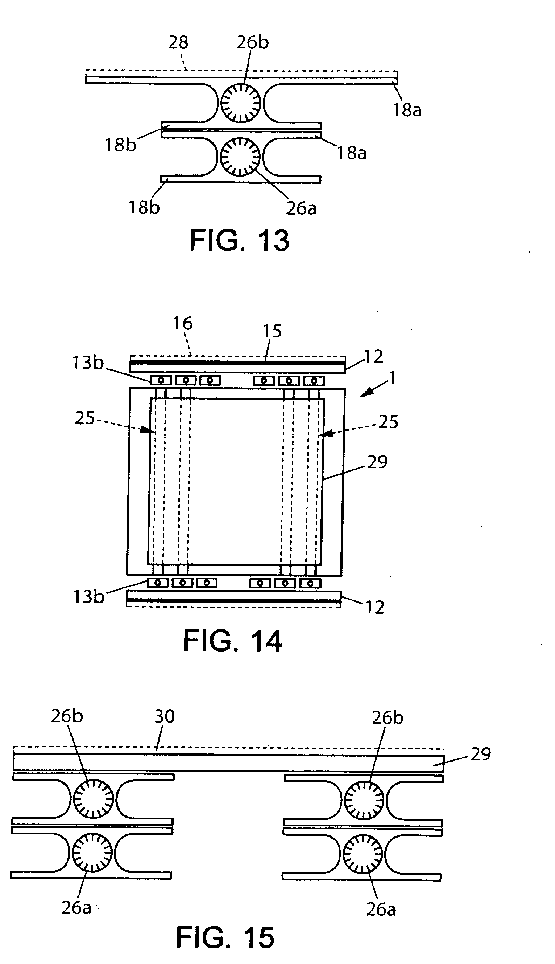

La figure 13 illustre schématiquement une vue en coupe d'une branche verticale 26a du caloduc de connexion inférieure 25a sur laquelle est posée une branche verticale 26b du caloduc de connexion supérieure 25b.

Il peut ainsi être remarqué que, pour permettre la dissipation d'une plus grande quantité de flux thermique vers l'espace, l'ailette supérieure18a de la branche verticale 26b du caloduc de connexion supérieur 25b est de dimension plus grande que l'ailette inférieure18b de la même branche verticale 26b qui est en contact avec l'ailette supérieure 18a de la branche verticale 26a du caloduc de connexion inférieur 25a. La branche verticale 26b du caloduc de connexion supérieure 25b est donc du type tel que décrit dans la figure 5B tandis que la branche verticale 26a du caloduc de connexion inférieure 25a est du type tel que décrit dans la figure 5A.

Afin de renforcer l'effet de réflexion des flux solaires reçus par l'ailette supérieure 18a de la branche verticale 26b du caloduc de connexion supérieur 25b, il est prévu de recouvrir cette ailette supérieure 18a par une couche de revêtement réfléchissant 28, préférentiellement des OSR.

De manière alternative, il est possible de prévoir que la branche verticale 26b du caloduc de connexion supérieur 25b et que la branche verticale 26a du caloduc de connexion inférieur 25a présentent des ailettes 18 de même dimension.

Dans ce cas de figure, et tel que cela est représenté sur les figures 14 et 15, et afin de renforcer la dissipation vers l'espace de la chaleur emmagasiné dans les caloducs de connexion 25, il est prévu de fixer, sur la pluralité des ailettes supérieures 18b des branches verticales 26b, 26d des caloducs de connexion supérieur 25b, 25d prévus sur une même face verticale, une plaque 29, préférentiellement en aluminium, recouverte par un revêtement réfléchissant 30, tel que de l'OSR.

Les figures 16 et 17 représentent deux vues en coupe schématique du dispositif de gestion des flux thermiques selon la première forme de réalisation de l'invention installé sur deux satellites géostationnaires ne présentant pas une forme générale parallélépipédique.

Ainsi, dans l'engin spatial illustré à la figure 16, les faces verticales, par exemple Est 8 et Ouest 9, sont inclinées par rapport à la verticale et de manière symétrique par rapport à l'axe central Nord-Sud.

Dans ce cas de figure, les caloducs de connexion 21 ne sont pas constitués de deux branches perpendiculaires entre elles mais de deux branches non perpendiculaires

Il en est de même pour l'engin spatial illustré à la figure 17 qui présente des faces verticales de forme bombée.

Il est bien entendu que le principe de l'invention s'applique à toute forme d'engin spatial.

La figure 18 est une vue en perspective d'une troisième forme de réalisation du dispositif selon l'invention, et la figure 19 est une vue en coupe schématique de la troisième forme de réalisation du dispositif selon l'invention.

Selon ce troisième mode de réalisation, il est prévu que les caloducs de connexion 21 en forme de L soient placés et fixés intérieurement sur les parois internes des faces du satellite 1.

Sinon, le dispositif selon l'invention reste identique aux dispositifs tels que précédemment décrits, à l'exception du fait que la branche horizontale 22 des caloducs de connexion 21 ne se trouve plus placées sur les extensions 20 des faces Nord 6 et Sud 7, mais sur la paroi interne des faces Nord 6 et Sud 7 dans l'espace interne du satellite 1 défini par ses six faces.

Il est donc également possible de prévoir selon ce troisième mode de réalisation tout type de structure de panneau radiatif en nid d'abeille 12.

Ainsi, selon l'invention, il est formé une boucles de caloducs à partir des caloducs présents sur les faces Nord 6 et Sud 7 dans les panneaux radiatif en nid d'abeille 12 et permettant de former une boucle de caloducs en contact de conduction thermique les uns avec les autres reliant les faces Nord et Sud à une autre paire de faces opposées du satellite, c'est-à-dire soit la pare de faces Est/Ouest, soit la paire de faces Terre/anti-Terre. Il n'est donc pas prévu, selon l'invention, de structure interne au satellite pour permettre la formation de cette boucle puisque les caloducs sont prévus en surface des faces du satellite.

De par la formation de cette boucle, il est obtenu une auto-régulation de la dissipation de la chaleur émise par les sources chaudes 19 prévues sur les faces Nord 6 et Sud 7 et répartie dans les différents caloducs de cette boucle en fonction du taux d'exposition des différentes faces sur lesquelles sont fixés ces caloducs.

La présente invention s'applique préférentiellement à un engin spatial situé sur une orbite géostationnaire. Néanmoins, le principe de l'invention reste identique pour un engin spatial placé sur n'importe quelle orbite autour de la Terre, par exemple les orbites fortement elliptiques ou HEO (High Eccentricity Orbit) ou les orbites inclinées.

De manière alternative aux modes de réalisation illustrés sur les figures où les panneaux radiatifs 12 sont fixés sur la face avant des secondes branches verticales 23 des caloducs de connexion 21 prévus sur les faces Est 8, Ouest 9, Terre 5A et anti-Terre 5B, il est également possible de prévoir que les panneaux radiatifs 12 soient fixés sur la face arrière des secondes branches verticales 23 des caloducs de connexion 21.

## Revendications

1. Engin spatial comportant un dispositif de gestion des flux thermiques, l'engin spatial (1) présentant toujours une même face (5A) tournée vers la Terre (4), une paire de faces opposées Nord (6) et Sud (7) parallèles entre elles et perpendiculaires à l'axe Nord-Sud de la Terre (4) et deux paires de faces opposées parallèles entre elles Est (8) 1 Ouest (9) et Terre (5A) 1 anti-Terre (5B), des équipements dissipateurs ou transmetteurs de chaleur (19) étant prévus sur les parois internes (6a, 7a) des faces Nord (6) et Sud (7), **caractérisé en ce que** ledit dispositif comprend une pluralité de caloducs (13a, 13b, 13c, 21, 25a, 25b, 25c, 25d) reliant les faces Nord (6) et Sud (7) dudit engin (1) à une autre paire de faces opposées (5A, 5B, 8, 9) dudit engin (1) et formant une boucle de caloducs (13a, 13b, 13c, 21, 25a, 25b, 25c, 25d) en contact de conduction thermique les uns avec les autres.

2. Engin spatial selon la revendication 1, **caractérisé en ce que** ledit dispositif comprend au moins une paire de caloducs de connexion (21, 25a, 25b, 25c, 25d) avec une première (22, 27a, 27b, 27c, 27d) et une seconde (23, 26a, 26b, 26c, 26d) branches, la première branche (22, 27a, 27b, 27c, 27d) de l'un des caloducs de connexion (21, 25a, 25b, 25c, 25d) de ladite paire de caloducs de connexion (21, 25a, 25b, 25c, 25d) étant fixée, en contact de conduction thermique, sur un panneau radiatif de la face Nord (6), et la première branche (22, 27a, 27b, 27c, 27d) de l'autre des caloducs de connexion (21, 25a, 25b, 25c, 25d) de ladite paire de caloducs de connexion (21, 25a, 25b, 25c, 25d) étant fixée, en contact de conduction thermique, sur un panneau radiatif de la face Sud (7).

3. Engin spatial selon la revendication 2, **caractérisé en ce que** ladite première branche (22, 27a, 27b, 27c, 27d) dudit caloduc de connexion (21, 25a, 25b, 25c, 25d) est fixée sur au moins une partie d'une extension (20) du panneau radiatif soit de la face Nord (6), soit de la face Sud (7) en saillie de ladite autre paire de faces opposées (5A, 5B, 8, 9).

4. Engin spatial selon la revendication 2, **caractérisé en ce que** ladite première branche (22) dudit caloduc de connexion (21) est fixée sur la paroi interne dudit panneau radiatif soit de la face Nord (6), soit de la face Sud (7), dans le volume intérieur délimité par les faces (5A, 5B, 8, 9) dudit engin spatial (1).

5. Engin spatial selon l'une quelconque des revendications 2 à 4, **caractérisé en ce que** ladite seconde branche (23, 26a, 26c) dudit caloduc de connexion (21, 25a, 25b, 25c, 25d) est fixée sur la paroi externe de l'une des faces appartenant à ladite autre paire de faces opposées (5A, 5B,8, 9).

6. Engin spatial selon l'une quelconque des revendications 2 à 5, **caractérisé en ce qu'**un panneau radiatif (12) est fixé sur lesdites secondes branches (23) de ladite paire de caloducs de connexion (21).

7. Engin spatial selon l'une quelconque des revendications 2 à 6, **caractérisé en ce que** lesdites première (22) et seconde (23) branches dudit caloduc de connexion (21) sont de même longueur.

8. Engin spatial selon l'une quelconque des revendications 2 à 6, **caractérisé en ce que** ladite seconde branche (26b, 26d) dudit caloduc de connexion (25b, 25d) de ladite paire de caloducs de connexion (25a, 25b, 25c, 25d) est fixée en contact de conduction thermique sur une autre seconde branche (26a, 26c) d'un autre caloduc de connexion (25a, 25c) de ladite paire de caloducs de connexion (25a, 25b, 25c, 25d) qui est elle-même fixée sur la paroi externe de l'une des faces appartenant à ladite autre paire de faces opposées (5A, 5B, 8, 9).

9. Engin spatial selon la revendication 8, **caractérisé en ce que** ladite seconde branche (26a, 26b, 26c, 26d) dudit caloduc de connexion (25a, 25b, 25c, 25d) est de longueur plus grande que ladite première branche (27a, 27b, 27c, 27d) dudit caloduc de connexion (25a, 25b, 25c, 25d).

10. Engin spatial selon la revendication 8 ou 9, **caractérisé en ce qu'**une plaque (29), préférentiellement en aluminium, est fixée sur les secondes branches (26b, 26d) desdits caloducs de connexion (25b, 25d) d'une même face appartenant à ladite autre paire de faces opposées (5A, 5B, 8, 9) et qui sont en contact de conduction thermique avec une seconde branche (26a, 26c) d'un autre caloduc de connexion (25a, 25c).

11. Engin spatial selon l'une quelconque des revendications 8 ou 9, **caractérisé en ce que** ladite seconde branche (26b, 26d) dudit caloduc de connexion (25b, 25d) qui est fixée sur la seconde branche (26a, 26c) d'un autre caloduc de connexion (25a, 25c) comprend une paire d'ailettes tangentielles (18a, 18b) à un élément tubulaire (17) dans lequel circule un fluide caloporteur, une des ailettes (18a) étant de dimension transversale plus grande que l'autre ailette (18b).

12. Engin spatial selon l'une quelconque des revendications 1 à 11, **caractérisé en ce qu'**il est prévu sur les faces Nord (6) et Sud (7) au moins un panneau radiatif avec une structure en nid d'abeille (12) sur, ou dans, lesquels sont associés des réseaux de caloducs (13a, 13b, 13c).

13. Engin spatial selon la revendication 12, **caractérisé en ce que** la structure en nid d'abeille (12) comporte un premier réseau de caloducs (13a) logés dans des alvéoles (14) dudit nid d'abeille (12) et un second réseau de caloducs (13b) placés extérieurement sur une surface dudit nid d'abeille (12) et perpendiculairement aux caloducs (13a) du premier réseau.

14. Engin spatial selon la revendication 12, **caractérisé en ce que** la structure en nid d'abeille (12) comporte un premier réseau de caloducs (13a) logés dans des alvéoles (14) dudit nid d'abeille (12) et un second réseau de caloducs (13b) traversants lesdites alvéoles (14) perpendiculairement aux caloducs (1 3a) dudit premier réseau.

## Claims

1. A spacecraft comprising a device for controlling heat flows, the spacecraft (1) always having the same face (5A) turned towards the Earth (4), a pair of opposite, parallel North (6) and South (7) faces perpendicular to the North-South axis of the Earth (4) and two pairs of opposite, parallel faces, East (8)/West (9) and Earth (5A)/anti-Earth (5B), heat-dissipating or -transmitting equipment (19) being provided on the internal walls (6a, 7a) of the North (6) and South (7) faces, **characterized in that** said device comprises a plurality of heat pipes (13a, 13b, 13c, 21, 25a, 25b, 25c, 25d) connecting the North (6) and South (7) faces of said craft (1) to another pair of opposite faces (5A, 5B, 8, 9) of said craft (1) and forming a loop of heat pipes (13a, 13b, 13c, 21, 25a, 25b, 25c, 25d) in thermal conduction contact with each other.

2. The spacecraft according to claim 1, **characterized in that** said device comprises at least one pair of connecting heat pipes (21, 25a, 25b, 25c, 25d) with first (22, 27a, 27b, 27c, 27d) and second (23, 26a, 26b, 26c, 26d) branches, the first branch (22, 27a, 27b, 27c, 27d) of one of the connecting heat pipes (21, 25a, 25b, 25c, 25d) of said pair of connecting heat pipes (21, 25a, 25b, 25c, 25d) being attached, in thermal conduction contact, to a radiating panel on the North face (6), and the first branch (22, 27a, 27b, 27c, 27d) of the other connecting heat pipe (21, 25a, 25b, 25c, 25d) of said pair of connecting heat pipes (21, 25a, 25b, 25c, 25d) being attached, in thermal conduction contact, to a radiating panel on the South face (7).

3. The spacecraft according to claim 2, **characterized in that** said first branch (22, 27a, 27b, 27c, 27d) of said connecting heat pipe (21, 25a, 25b, 25c, 25d) is attached to at least one part of an extension (20) of the radiating panel on either the North face (6) or the South face (7), overhanging said other pair of opposite faces (5A, 5B, 8, 9).

4. The spacecraft according to claim 2, **characterized in that** said first branch (22) of said connecting heat pipe (21) is attached to the internal wall of said radiating panel either on the North face (6) or on the South face (7), in the internal volume defined by the faces (5A, 5B, 8, 9) of said spacecraft (1).

5. The spacecraft according to any one of claims 2 to 4, **characterized in that** said second branch (23, 26a, 26c) of said connecting heat pipe (21, 25a, 25b, 25c, 25d) is attached to the external wall of one of the faces belonging to said other pair of opposite faces (5A, 5B, 8, 9).

6. The spacecraft according to any one of claims 2 to 5, **characterized in that** a radiating panel (12) is attached to said second branches (23) of said pair of connecting heat pipes (21).

7. The spacecraft according to any one of claims 2 to 6, **characterized in that** said first (22) and second (23) branches of said connecting heat pipe (21) are the same length.

8. The spacecraft according to any one of claims 2 to 6, **characterized in that** said second branch (26b, 26d) of said connecting heat pipe (25b, 25d) of said pair of connecting heat pipes (25a, 25b, 25c, 25d) is attached in thermal conduction contact to another second branch (26a, 26c) of another connecting heat pipe (25a, 25c) of said pair of connecting heat pipes (25a, 25b, 25c, 25d), which itself is attached to the external wall of one of the faces belonging to said other pair of opposite faces (5A, 5B, 8, 9).

9. The spacecraft according to claim 8, **characterized in that** said second branch (26a, 26b, 26c, 26d) of said connecting heat pipe (25a, 25b, 25c, 25d) is longer than said first branch (27a, 27b, 27c, 27d) of said connecting heat pipe (25a, 25b, 25c, 25d).

10. The spacecraft according to claim 8 or 9, **characterized in that** a plate (29), preferably aluminium, is attached to the second branches (26b, 26d) of said connecting heat pipes (25b, 25d) on the same face belonging to said other pair of opposite faces (5A, 5B, 8, 9), which are in thermal conduction contact with a second branch (26a, 26c) of another connecting heat pipe (25a, 25c).

11. The spacecraft according to any one of claims 8 or 9, **characterized in that** said second branch (26b, 26d) of said connecting heat pipe (25b, 25d), which is attached the second branch (26a, 26c) of another connecting heat pipe (25a, 25c) comprises a pair of fins (18a, 18b) tangential to a tubular component (17) in which a coolant circulates, one of the fins (18a) having a larger transverse dimension than the other fin (18b).

12. The spacecraft according to any one of claims 1-11, **characterized in that** at least one radiating panel with a honeycomb structure (12) is provided on the North (6) and South (7) faces, on or in which networks of heat pipes (13a, 13b, 13c) are attached.

13. The spacecraft according to claim 12, **characterized in that** the honeycomb structure (12) comprises a first network of heat pipes (13a) housed in cells (14) of said honeycomb (12) and a second network of heat pipes (13b) placed externally on a surface of said honeycomb (12) and perpendicular to the heat pipes (13a) in the first network.

14. The spacecraft according to claim 12, **characterized in that** the honeycomb structure (12) comprises a first network of heat pipes (13a) housed in cells (14) of said honeycomb (12) and a second network of heat pipes (13b) passing through said cells (14) perpendicularly to the heat pipes (13a) in the first network.

## Patentansprüche

1. Raumfahrzeug, umfassend eine Vorrichtung zur Führung der Wärmeflüsse, wobei stets dieselbe Seite (5A) des Raumfahrzeugs (1) der Erde (4) zugewandt ist, wobei ein Paar entgegengesetzter zueinander parelleler Nord- (6) und Südseiten (7), welche senkrecht zu der Nord-Süd-Achse der Erde (4) sind, und zwei Paare zueinander paralleler entgegengesetzter Ost- (8)/Westseiten (9) und Erde- (5A)/Anti-Erdeseiten (5B), wobei wärmedissipierende oder -übertragende Vorrichtungen (19) an den Innenwänden (6a, 7a) der Nord- (6) und Südseiten (7) vorgesehen sind, **dadurch gekennzeichnet, dass** die Vorrichtung eine Mehrzahl von Wärmeleitern (13a, 13b, 13c, 21, 25a, 25b, 25c, 25d) umfasst, welche die Nord- (6) und Südseiten (7) des Fahrzeugs (1) mit einem anderen Paar entgegengesetzter Seiten (5A, 5B, 8, 9) des Fahrzeugs (1) verbinden und eine Wärmeleiter-Schlaufe (13a, 13b, 13c, 21, 25a, 25b, 25c, 25d) bilden, wobei die Wärmeleiter der Schlaufe miteinander in Wärmeleitungskontakt stehen.

2. Raumfahrzeug nach Anspruch 1, **dadurch gekennzeichnet, dass** die Vorrichtung wenigstens ein Paar von Wärmeleitern zur Verbindung (21, 25a, 25b, 25c, 25d) mit einem ersten Zweig (22, 27a, 27b, 27c, 27d) und einem zweiten Zweig (23, 26a, 26b, 26c, 26d) umfasst, wobei der erste Zweig (22, 27a, 27b, 27c, 27d) von einem der Verbindungswärmeleiter (21, 25a, 25b, 25c, 25d) des Paars von Verbindungswärmeleitern (21, 25a, 25b, 25c, 25d) in Wärmeleitungskontakt an einem Strahlungspanel der Nordseite (6) befestigt ist und der erste Zweig (22, 27a, 27b, 27c, 27d) des anderen der Verbindungswärmeleiter (21, 25a, 25b, 25c, 25d) des Paars von Verbindungswärmeleitern (21, 25a, 25b, 25c, 25d) in Wärmeleitungskontakt an einem Strahlungspanel der Südseite (7) befestigt ist.

3. Raumfahrzeug nach Anspruch 2, **dadurch gekennzeichnet, dass** der erste Zweig (22, 27a, 27b, 27c, 27d) des Verbindungswärmeleiters (21, 25a, 25b, 25c, 25d) an wenigstens einem Abschnitt einer Erstreckung (20) des Strahlungspanels entweder von der Nordseite (6) oder von der Südseite (7) von dem anderen Paar entgegengesetzter Seiten (5A, 5B, 8, 9) hervorstehend befestigt ist.

4. Raumfahrzeug nach Anspruch 2, **dadurch gekennzeichnet, dass** der erste Zweig (22) des Verbindungswärmeleiters (21) an der Innenwand des Strahlungspanels entweder von der Nordseite (6) oder von der Südseite (7) in dem Innenvolumen befestigt ist, welches durch die Seiten (5A, 5B, 8, 9) des Raumfahrzeugs (1) begrenzt ist.

5. Raumfahrzeug nach einem der Ansprüche 2 bis 4, **dadurch gekennzeichnet, dass** der zweite Zweig (23, 26a, 26c) des Verbindungswärmeleiters (21, 25a, 25b, 25c, 25d) an der Außenseite von einer der Seiten befestigt ist, welche zu dem anderen Paar entgegengesetzter Seiten (5A, 5B, 8, 9) gehört.

6. Raumfahrzeug nach einem der Ansprüche 2 bis 5, **dadurch gekennzeichnet, dass** ein Strahlungspanel (12) an den zweiten Zweigen (23) des Paars von Verbindungswärmeleitern (21) befestigt ist.

7. Raumfahrzeug nach einem der Ansprüche 2 bis 6, **dadurch gekennzeichnet, dass** die ersten (22) und zweiten (23) Zweige des Verbindungswärmeleiters (21) die gleiche Länge aufweisen.

8. Raumfahrzeug nach einem der Ansprüche 2 bis 6, **dadurch gekennzeichnet, dass** der zweite Zweig (26b, 26d) des Verbindungswärmeleiters (25b, 25d) des Paars von Verbindungswärmeleitern (25a, 25b, 25c, 25d) in Wärmeleitungskontakt an einem anderen zweiten Zweig (26a, 26c) eines anderen Verbindungswärmeleiters (25a, 25c) des Paars von Verbindungswärmeleitern (25a, 25b, 25c, 25d) befestigt ist, der selbst an der Außenwand einer der Seiten befestigt ist, die zu dem anderen Paar entgegengesetzter Seiten (5A, 5B, 8, 9) gehören.

9. Raumfahrzeug nach Anspruch 8, **dadurch gekennzeichnet, dass** der zweite Zweig (26a, 26b, 26c, 26d) des Verbindungswärmeleiters (25a, 25b, 25c, 25d) eine Länge aufweist, die größer ist als der erste Zweig (27a, 27b, 27c, 27d) des Verbindungswärmeleiters (25a, 25b, 25c, 25d).

10. Raumfahrzeug nach Anspruch 8 oder 9, **dadurch gekennzeichnet, dass** eine Platte (29), vorzugsweise aus Aluminium, an den zweiten Zweigen (26b, 26d) der Verbindungswärmeleiter (25b, 25d) derselben Seite befestigt ist, die zu dem anderen Paar entgegengesetzter Seiten (5A, 5B, 8, 9) gehören und in Wärmeleitungskontakt mit einem zweiten Zweig (26a, 26c) eines anderen Verbindungswärmeleiters (25a, 25c) stehen.

11. Raumfahrzeug nach Anspruch 8 oder 9, **dadurch gekennzeichnet, dass** der zweite Zweig (26b, 26d) des Verbindungswärmeleiters (25b, 25d), der an dem zweiten Zweig (26a, 26c) eines anderen Verbindungswärmeleiters (25a, 25c) befestigt ist, ein Paar von Flügeln (18a, 18b) tangential zu einem rohrartigen Element (17) umfasst, in welchem ein Kühlmittelfluid zirkuliert, wobei einer der Flügel (18a) größere transversale Ausmaße aufweist als der andere Flügel (18b).

12. Raumfahrzeug nach einem der Ansprüche 1 bis 11, **dadurch gekennzeichnet, dass** an den Nord- (6) und Südseiten (7) wenigstens ein Strahlungspanel mit einer Struktur von Bienenwaben (12) vorgesehen ist, an oder in denen Wärmeleiternetze (13a, 13b, 13c) assoziiert sind.

13. Raumfahrzeug nach Anspruch 12, **dadurch gekennzeichnet, dass** die Bienenwaben-Struktur (12) ein erstes Netz von Wärmeleitern (13a) umfasst, welche in Zellen (14) der Bienenwaben (12) aufgenommen sind, und ein zweites Netz von Wärmeleitern (13b), welche außen an einer Fläche der Bienenwaben (12) senkrecht zu den Wärmeleitern (13a) des ersten Netzes angeordnet sind.

14. Raumfahrzeug nach Anspruch 12, **dadurch gekennzeichnet, dass** die Bienenwaben-Struktur (12) ein erstes Netz von Wärmeleitern (13a) umfasst, welche in Zellen (14) der Bienenwaben (12) aufgenommen sind, und ein zweites Netz von Wärmeleitern (13b), welche die Zellen (14) senkrecht zu den Wärmeleitern (13a) des ersten Netzes durchqueren.
